# DEMANDE DE BREVET EUROPEEN

(11) **EP 1 617 335 A1**
(43) Date de publication de la demande: **18.01.2006**
(21) Numéro de dépôt: 05291449.6
(22) Date de dépôt: 05.07.2005
(51) Int. Cl.: G06F 13/28

(54) **Procédé de programmation d'un contrôleur de DMA dans un système sur puce et système sur puce associé**

(30) Priorité: 12.07.2004 FR 0407763
(71) Demandeur: STMicroelectronics SA, 92120 Montrouge (FR)
(72) Inventeur: Martinez, Albert, 13320 Bouc Bel Air (FR); Nicolai, Jean, 13790 Chateauneuf Le Rouge (FR)
(74) Mandataire: Verdure, Stéphane

(57) **Abrégé**

Procédé de programmation d'un contrôleur de DMA dans un système sur puce (1) comprenant une CPU (2), une MMU (4), un contrôleur de DMA (11) relié à un bus d'adresses (BA) et à un bus de données (BD) et comprenant et comportant un registre de source (14), un registre de destination (15) et un registre de taille (13) associés à une sous-adresse de base (PA_DMA_BASE), selon lequel, en réponse à une première instruction (T1, T2) d'un programme utilisateur (P) et comprenant un argument d'adresse virtuelle (VA_SRC ; VA_DEST), la MMU traduit conformément à une table de traduction (T) l'adresse virtuelle en adresse physique correspondante (PA_SRC ; PA_DEST), qui est ensuite mémorisée dans un registre tampon (7) inaccessible par le programme utilisateur. En réponse à une deuxième instruction (S1, S2) du programme utilisateur, l'adresse physique stockée dans le registre tampon est appliquée sur le bus de données et un premier mot (M_{SRC}, M_{DEST}) comprenant des bits de poids fort indiquant la sous-adresse de base est appliqué sur le bus d'adresses. Le contrôleur de DMA sélectionne le registre de source ou de destination en fonction du premier mot appliqué sur le bus d'adresses et mémorise, dans ce registre, l'adresse physique appliquée sur le bus de données.

## Description

La présente invention concerne les systèmes intégrés sur silicium ou SoC (de l'anglais "System On Chip"), comprenant au moins une unité centrale de traitement ou CPU ("Central Processing Unit") sur laquelle des programmes peuvent s'exécuter, un contrôleur d'accès direct à la mémoire ou contrôleur de DMA ("Direct Memory Access"), une mémoire et une unité de gestion de mémoire.

De tels SoC sont par exemple présents dans des appareils électroniques tels qu'un ordinateur à usage général, un boîtier décodeur ou "Set-Top-Box", un assistant numérique personnel ou PDA ("Personal Digital Assistant"), un téléphone portable etc.

La présente invention concerne plus précisément la programmation du contrôleur de DMA d'un tel SoC.

Dans la mémoire physique, un espace mémoire de taille variable est alloué dynamiquement à chaque programme d'application ou programme utilisateur. Plus spécifiquement, chaque programme utilisateur n'a accès qu'à une partie des pages de la mémoire physique. Ces pages forment un espace mémoire (éventuellement discontinu) qui est adressé au niveau du bus mémoire par des adresses physiques, mais qui est connu du programme utilisateur via un espace d'adressage (en général continu), dit espace d'adressage virtuel auquel le programme accède avec des adresses virtuelles. L'espace d'adressage virtuel est propre au programme utilisateur. La relation qui lie les adresses virtuelles dans ledit espace d'adressage et les adresses physiques dans la mémoire physique est stockée sous la forme d'une table de traductions appelée table des pages, qui est gérée par le système d'exploitation et stockée dans la mémoire principale. Les dernières traductions d'adresses calculées par l'unité de rechargement de table de la MMU sont stockées dans une mémoire cache spécifique appelée TLB (TLB, de l'anglais "Translation Look-aside Buffer").

De façon connue, chaque entrée ("Entry" en anglais) de la TLB, i.e., chaque ligne correspondant à une traduction dans la TLB comprend un identificateur d'espace d'adressage (ou ASID, de l'anglais "Adress Space IDentifier") afin de distinguer des adresses virtuelles identiques dans des espaces d'adressage différents. Chaque ASID est respectivement associé, de manière univoque, à un espace d'adressage déterminé du système.

Le contrôleur de DMA effectue des transferts de données entre la mémoire interne du SoC et des dispositifs mémoires périphériques (par exemple, des disques), à partir d'informations qui lui sont fournies. Ces informations comportent l'adresse physique de source du transfert, l'adresse physique de destination du transfert et enfin la taille de la zone mémoire à transférer.

Dans l'art antérieur, un programme requérant une programmation du contrôleur de DMA en vue d'un transfert DMA s'exécutant sur le SoC en mode utilisateur (appelé encore mode applicatif ou mode non-privilégié) fournit une adresse virtuelle, qui est l'adresse virtuelle de la source du transfert DMA ou de la destination du transfert DMA, au système d'exploitation ou OS ("Operating System"). L'OS, s'exécutant en mode privilégié (appelé encore mode superviseur ou mode noyau) prend alors la main, traduit l'adresse virtuelle fournie en une adresse physique correspondante. Il requiert successivement la mémorisation de l'adresse physique de source du transfert obtenue dans le registre de source, la mémorisation de l'adresse de destination dans le registre de destination et enfin la mémorisation de la taille dans le registre de taille, et ce à partir de l'adresse virtuelle des registres. L'OS supervise ensuite le transfert réalisé par le contrôleur de DMA à partir des informations figurant dans ses registres et avertit le programme initiateur de la requête, du résultat du transfert.

Les instructions de mémorisation utilisées généralement sont du type : "STORE pa_src@dma_src_reg_adr", "STORE pa_dest@dma_dest_reg_adr" et "STORE size@dma_size_reg_adr", où "pa_src" est l'adresse physique de source, "pa_dest" est l'adresse physique de destination, "size" est la taille de la zone mémoire transférée, "dma_src_reg_adr", "dma_dest_reg_adr" et "dma_size_reg_adr" sont respectivement les adresses virtuelles des registres de source, de destination et de taille. La première instruction ci-dessus signifie en langage naturel « mémoriser la donnée correspondant à l'adresse physique de source "pa_src" dans le registre d'adresse de source du contrôleur de DMA dont l'adresse virtuelle est "dma_src_reg_adr" ». Cette instruction fournit donc un argument d'adresse virtuelle "dma_src_reg_adr" et un argument de données "pa_src" à stocker à l'adresse fournie comme argument d'adresse.

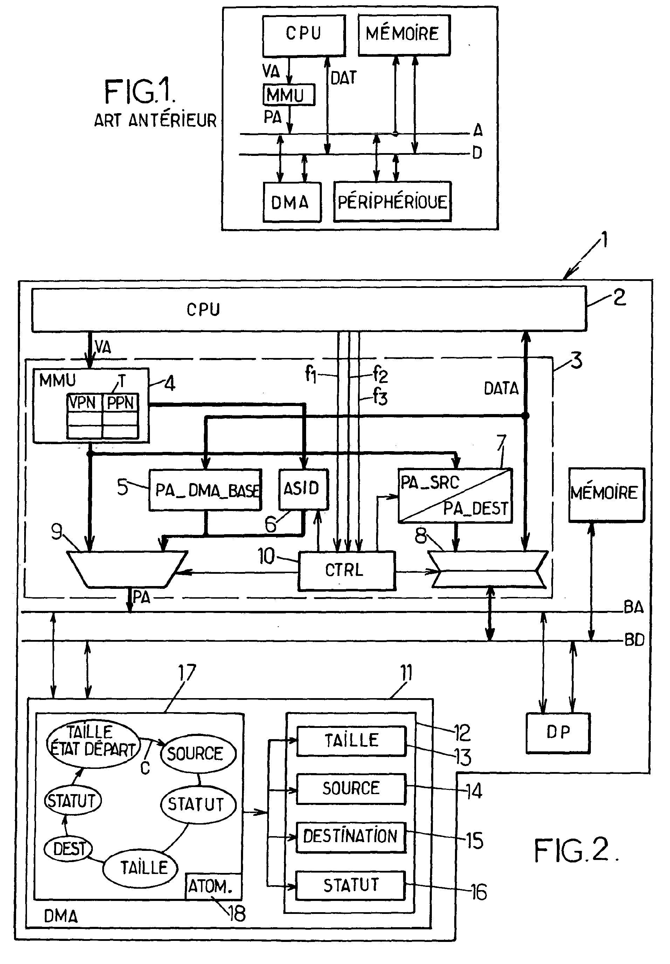

En référence à la figure 1 représentant schématiquement un exemple de SoC tel que considéré précédemment, le cheminement d'une programmation du contrôleur de DMA suivant l'art antérieur est le suivant : l'adresse virtuelle "dma_src_reg_adr" est appliquée par la CPU à destination de la MMU sur ie bus d'adresses virtuelles VA. La MMU la traduit en adresse physique, vérifie les droits d'accès à cette adresse physique, puis l'applique sur le bus d'adresse physiques PA, par lequel elle est mise à disposition notamment du contrôleur de DMA sur le bus général A qui est relié à un ensemble d'entités comprenant par exemple des contrôleurs de disques, la mémoire physique etc.

En parallèle, l'adresse physique de source "pa_src" est appliquée par la CPU sur le bus de données DAT, à partir duquel elle est mise à disposition sur le bus général de données D, également relié à l'ensemble d'entités.

Les applications de l'adresse de source sur le bus général de données D et de l'adresse du registre de source sur le bus général d'adresses A sont réalisées en fonction du protocole retenu pour la gestion des bus. Suivant les protocoles de gestion de bus, l'adresse physique du registre de source est appliquée par exemple sur le bus général d'adresses A quasi-simultanément à l'application de l'adresse physique de source « pa_src » sur le bus général de données D, ou l'adresse du registre de source est positionnée sur le bus général d'adresses A un coup d'horloge avant le positionnement sur le bus général de données D de l'adresse physique de source (pour un protocole où les adresses sont positionnées un coup d'horloge avant les données correspondantes), ou encore l'une des applications est faite sur front montant tandis que l'autre est faite sur front descendant etc.

La traduction est effectuée par la MMU à l'aide d'une table de traduction.

Plusieurs tentatives ont été récemment effectuées pour programmer le contrôleur de DMA directement par un programme s'exécutant en mode utilisateur, et non plus par l'OS. Ce besoin provient notamment de la proportion très importante du temps requis pour une programmation de contrôleur de DMA par l'OS, par rapport au temps du transfert lui-même des données opéré par le contrôleur de DMA.

Une des difficultés rencontrées provient du fait que les registres du contrôleur de DMA doivent être programmés avec des adresses physiques, alors que les programmes en mode utilisateur n'y ont pas accès et qu'il n'est pas souhaitable, notamment pour des raisons de sécurité, qu'ils y aient accès.

Des solutions sont proposées dans ies documents « User-Level DMA without Operating System Kernel Modification », de Evangelos P. Markatos et Manolis G.H. Katevenis, Institute of Computer Science, Science and Technology Park of Crete, 1997 IEEE, « Protected User-Level DMA for the Shrimp Network Interface », de M.A. Blumrich et al., Proc of the 2^{nd} International Symposium on High Performance Computer Architecture, pages 154-165, February 1996 et « Integration of Message Passing and Shared Memory in the Stanford Flash Multi-Processor », de J. Heinlein et al., Proc. Of the 6th International Conference on Architectural Support for Programming Languages and Operating Systems, pages 38-50, 1994.

Selon ces solutions, le programme utilisateur exécute une instruction de mémorisation existante de type de l'instruction STORE évoquée ci-dessus, mais place comme argument d'adresse l'adresse virtuelle de source ou de destination qu'il désire programmer dans le contrôleur de DMA, et non l'adresse du registre du contrôleur de DMA à programmer. Ceci a pour effet de forcer la MMU à traduire l'adresse virtuelle fournie, de source ou de destination, en adresse physique correspondante. Cette technique permet en outre à la MMU de contrôler que le programme utilisateur a bien le droit d'accéder à cette adresse.

Deux difficultés supplémentaires ont dû être prises en compte. Tout d'abord, il faut faire en sorte que le contrôleur de DMA recueille cette adresse physique qui se trouve sur le bus d'adresses A, et l'écrive comme une donnée dans son registre de source ou de destination. Par ailleurs, il faut également permettre que la zone mémoire à laquelle l'adresse physique appliquée sur le bus correspond, ignore l'instruction "STORE" car elle ne lui est pas adressée.

Le document cité ci-dessus permet de fournir une solution à ces problèmes. Cette solution consiste à mettre à 1 le bit le plus significatif (bit de plus fort poids ou MSB) de l'adresse de source ou de destination d'un transfert DMA avant qu'elle ne soit fournie à la MMU. Ainsi le contrôleur de DMA recueille à l'aide de sa machine d'état adaptée, comme une donnée à mémoriser dans un de ses registres, tout mot comportant un MSB à 1.

Cette solution réalise donc un adressage implicite (ou "shadow adressing"), basé sur l'instruction de mémorisation "STORE" et le préfixe 1.

L'inconvénient de cette technique est que le système ne doit comporter aucune zone mémoire ou dispositif périphérique dont l'adresse commence par 1, ce qui divise par deux l'espace mémoire adressable réellement disponible. Ainsi pour un système 32 bits (soit 4 Go), l'espace mémoire adressable en pratique est réduit de moitié, à 2^31 bits (soit 2 Go), ce qui est très pénalisant.

La présente invention vise à pallier cet inconvénient de l'art antérieur.

A cet effet, suivant un premier aspect, l'invention propose un procédé de programmation d'un contrôleur de DMA dans un système sur puce comprenant une unité centrale de traitement, une unité de gestion de mémoire adaptée pour traduire un mot d'adresse virtuelle conformément à une table de traduction déterminée, un contrôleur de DMA relié à un bus d'adresses et à un bus de données et comprenant au moins un ensemble de registres associé à une sous-adresse de base, chaque ensemble comportant au moins un registre de source, un registre de destination et un registre de taille. Ledit procédé comprend les étapes suivantes mises en oeuvre sous la commande de l'unité centrale de traitement :
- en réponse à une première instruction dédiée déterminée d'un programme utilisateur, comprenant un argument d'adresses indiquant une adresse virtuelle, l'unité de gestion de mémoire traduit ladite adresse virtuelle en adresse physique correspondante, ladite adresse physique correspondante étant mémorisée dans un registre tampon inaccessible par le programme utilisateur.
- en réponse à une deuxième instruction dédiée déterminée du programme utilisateur, ladite adresse physique stockée dans le registre tampon est appliquée sur le bus de données et un premier mot comprenant au moins des bits de poids fort indiquant la sous-adresse de base est appliqué sur le bus d'adresses ;
- le contrôleur de DMA sélectionne un registre parmi le registre de source et le registre de destination en fonction du premier mot appliqué sur le bus d'adresses en réponse à la deuxième instruction et mémorise, dans ledit registre sélectionné, l'adresse physique appliquée sur le bus de données.

Suivant un second aspect, l'invention propose un système sur puce comprenant un contrôleur de DMA relié à un bus d'adresses et à un bus de données et comprenant au moins un ensemble de registres associée à une sous-adresse de base, chaque ensemble comportant au moins un registre de source, un registre de destination et un registre de taille.

Le système sur puce comporte en outre un bloc de traitement d'adresses comprenant :
- une unité de gestion de mémoire adaptée pour traduire un mot d'adresse virtuelle fourni en entrée en un mot d'adresse physique conformément à une table de traduction déterminée ;
- un registre tampon inaccessible par le programme utilisateur ;
- un registre d'ensemble comportant au moins la sous-adresse de base du contrôleur de DMA;
- une unité centrale de traitement adaptée pour, en réponse à au moins une première instruction déterminée dédiée à la programmation de contrôleur de DMA, puis en réponse à au moins une seconde instruction déterminée dédiée à la programmation de contrôleur de DMA, lesdites instructions dédiées étant comprises dans un programme utilisateur s'exécutant sur l'unité centrale de traitement et, comportant un argument d'adresses indiquant une adresse virtuelle, fournir ladite adresse virtuelle à l'unité de gestion de mémoire.

Le bloc de traitement d'adresses comprend en outre des moyens pour mémoriser dans le registre tampon l'adresse physique résultant de la traduction par l'unité de gestion de mémoire de l'adresse virtuelle conformément à la table de traduction.

Ledit bloc de traitement d'adresses est adapté pour, en réponse à la réception d'instructions déterminées comportant au moins la deuxième instruction, constituer des mots comprenant au moins des bits de poids fort indiquant la sous-adresse de base mémorisée dans le registre d'ensemble et pour appliquer ces mots sur le bus d'adresses, et pour, lorsque l'instruction est la deuxième instruction, en plus de l'application sur le bus d'adresses d'un premier mot constitué suite à la réception de la deuxième instruction, appliquer sur le bus de données l'adresse physique mémorisée dans le registre tampon.

Le contrôleur de DMA est adapté pour sélectionner un registre parmi le registre de source et le registre de destination en fonction du premier mot appliqué sur le bus d'adresses en réponse à la deuxième instruction et pour mémoriser, dans le registre sélectionné, l'adresse physique appliquée sur le bus de données.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation d'un système sur puce de l'art antérieur ;
- la figure 2 représente un système sur puce selon un mode de réalisation de l'invention ;
- la figure 3 représente les différents éléments appliqués sur le bus de données BD et le bus d'adresses BA lors d'une programmation d'un contrôleur de DMA dans un mode de réalisation de l'invention.

On considère dans le mode de réalisation ci-après décrit un système sur une puce 1 avec une architecture standard à N bits, dans laquelle une adresse virtuelle se présente sous la forme d'un nombre formant adresse virtuelle codée sur ces N bits.

L'architecture considérée par la suite est à 32 bits et telle qu'une adresse virtuelle se présente sous la forme d'un nombre formant adresse de page codée sur les 20 bits de poids fort ou VPN (en anglais "Virtual Page Number"), suivie par un décalage (en anglais "offset ") dans ladite page, codé sur les 12 bits de poids faible. L'invention peut toutefois être mise en oeuvre dans tout type d'architecture.

Le système sur puce 1 représenté sur la figure 2 et correspondant à un mode de réalisation de l'invention, comprend une unité centrale de traitement ou CPU 2, sur laquelle s'exécutent des programmes utilisateurs.

Le système sur puce 1 comprend également un bloc de traitement d'adresses 3. Le bloc de traitement d'adresses 3 comprend une MMU 4, un registre 5 d'ensemble, un registre d'identifiant 6, un registre tampon 7, un multiplexeur/démultiplexeur 8, un multiplexeur 9 et un bloc de contrôle 10.

Le système sur puce 1 comprend en outre un contrôleur de DMA 11, qui comporte un ensemble 12 de registres requis pour effectuer ia programmation du transfert DMA. Cet ensemble 12 de registres comprend un registre de taille 13, un registre de source 14, un registre de destination 15 et un registre de statut 16. Les registres 13, 14, 15 de taille, de source et de destination sont adaptés pour mémoriser des données de programmation comprenant respectivement la taille, l'adresse de source et l'adresse de destination, du transfert DMA à effectuer. Le registre de statut 16 est adapté pour mémoriser le statut des opérations de programmation visant à mémoriser ces données de programmation dans les registres correspondants 13, 14, 15. Le contrôleur de DMA 11 comprend également une machine d'états 17, adaptée pour sélectionner un registre de l'ensemble 12 et y mémoriser des données de programmation. La machine d'états 17 comporte en outre un registre d'atomicité 18.

Un bus d'adresses général BA interconnecte le bloc de traitement d'adresse 3, le contrôleur de DMA 11, la CPU 2, des dispositifs périphériques DP, une mémoire RAM etc. De la même façon, un bus de données BD interconnecte ces différentes entités.

L'ensemble 12 de registres du contrôleur de DMA 11 est associé à une sous-adresse physique de base PA_DMA_BASE, qui est une adresse de page, codée sur 20 bits. L'adressage des différents registres 13 à 16 de l'ensemble 12 est effectué par l'ajout d'un décalage respectif dans cette page, codé sur les 12 bits de poids faible.

Dans ce qui suit, on considère la notation hexadécimale pour les valeurs d'adresse. Et les symboles « 0x » précédant un nombre en notation hexadécimale signifient que ce nombre est une valeur d'adresse.

Par exemple, la sous-adresse de base PA_DMA_BASE est égale à 0xF0000. L'adresse du registre de taille 13 est 0xF0000330, l'adresse du registre de source 14 est 0xF0000334, l'adresse du registre de destination 15 est 0xF0000338 et l'adresse du registre de statut 16 est 0xF000033C.

La sous-adresse de base PA_DMA_BASE de l'ensemble 12 est écrite dans le registre d'ensemble 5 lors de l'initialisation du système sur puce 1 par le système d'exploitation.

Le fonctionnement de la machine d'états 17 du contrôleur de DMA 11 est ie suivant : quand elle détecte la présence de la sous-adresse de base PA_DMA_BASE dans les bits de poids fort d'un mot M placé sur le bus d'adresses BA, elle sélectionne un registre déterminé parmi les registres de l'ensemble 12. S'il s'agit d'un des registres 14, 15, 13 de source, de destination ou de taille, elle mémorise dans le registre sélectionné les données figurant alors sur le bus de données BD. S'il s'agit du registre de statut 16, elle applique sur le bus de données BD le contenu du registre 16.

La détermination du registre à sélectionner est réalisée en fonction de l'état courant de la machine d'états 17 conformément à un cycle C ordonné d'états. Le cycle comporte des états successifs relatifs à la taille (point de départ), la source, le statut, la taille, la destination, puis le statut, avant de revenir au point de départ. Lorsque la machine d'états 17 est au début d'une programmation de contrôleur de DMA, elle est en état de sélectionner le registre de taille 13, c'est-à-dire qu'elle pointe sur l'adresse 0xF0000330 dudit registre de taille 13. Puis, une fois la sélection du registre 13 effectuée, elle incrémente son pointeur et pointe alors sur l'adresse 0xF0000334 du registre de source 14 et est alors en état de sélectionner ledit registre de source 14. Puis une fois la sélection du registre 14 effectuée, elle déplace son pointeur, qui pointe alors sur l'adresse 0xF000033C du registre de statut 16 et est alors en état de sélectionner ledit registre de statut 16. Puis une fois la sélection du registre 16 effectuée, la machine d'états 17 déplace à nouveau son pointeur et pointe une nouvelle fois sur l'adresse O×F0000330 du registre de taille 13. Puis une fois la sélection du registre 13 effectuée, elle déplace son pointeur et pointe alors sur l'adresse 0xF0000338 du registre de destination 15. Elle est alors en état de sélectionner ledit registre de destination 15. Puis une fois la sélection du registre 15 effectuée, elle déplace son pointeur de manière à pointer sur l'adresse 0xF000033C du registre de statut 16. Elle est alors en état de sélectionner ledit registre de statut 16. Enfin, une fois la sélection du registre 16 effectuée, elle pointe à nouveau sur l'adresse 0xF0000330 du registre de taille 13, et est de nouveau prête à la programmation des registres 13,14,15 de l'ensemble 12 pour un nouveau transfert DMA. D'autres modes de réalisation de la machine d'états et du contrôleur de DMA seront présentés plus loin.

Dans le mode de réalisation qui va maintenant être décrit, toujours en référence à ia figure 2, ia machine d'états 17 est adaptée pour capturer, avant de sélectionner effectivement le registre sur l'adresse duquel elle pointe, dans un mot M appliqué sur le bus d'adresses BA et comportant en bits de poids fort la sous-adresse PA_DMA_BASE, les 8 bits suivant ladite sous-adresse.

Si la machine d'états 17 est dans l'état de départ, ces 8 bits sont mémorisés dans le registre d'atomicité 18. La machine d'états 17 pointant alors sur le registre de taille 13, elle sélectionne ledit registre de taille 13 et y mémorise les données alors appliquées sur le bus de données BD. Puis selon que la mémorisation effectuée dans le registre de taille 13 s'est déroulée avec succès ou non, la machine d'états 17 renseigne un champ, dédié au statut relatif à l'opération de programmation de la taille, dans le registre 16 de statut avec un code indiquant un succès ou un échec

Si la machine d'états 17 pointe sur le registre de taille 13 en-dehors de l'état de départ, le registre de source 14 ou de destination 15, les 8 bits extraits du mot M appliqué sur le bus BA sont comparés à ceux présents dans le registre d'atomicité 18.

Si ils ne sont pas égaux, la sélection du registre pointé n'est pas réalisée et les données placées sur le bus de données BD ne sont pas mémorisées. Et la machine d'états 17 renseigne un champ déterminé dans le registre de statut 16 qui est dédié au statut des opérations de programmation de source ou de destination, selon le registre pointé, avec un code indiquant un échec.

Si ils sont égaux, le registre pointé est sélectionné et la mémorisation s'effectue. Puis, selon qu'elle s'est déroulé avec succès ou non, le registre de statut 16 est mis à jour avec un code indiquant un succès ou un échec correspondant.

Si la machine d'états 17 pointe sur le registre de statut 16, les 8 bits extraits du mot M appliqué sur le bus d'adresses BA sont comparés à ceux présents dans le registre d'atomicité 18. Si ils ne sont pas égaux, la machine d'états 17 renseigne le registre 16 de statut avec un code indiquant un échec.

Puis indépendamment de l'égalité ou non entre les 8 bits extraits du mot M appliqué sur le bus d'adresses BA et ceux présents dans le registre d'atomicité 18, ia machine d'états 17 applique sur ie bus de données BD le contenu du registre de statut 16. Cette application sur le bus BD permet d'effectuer un rapport à la CPU 2 relatif aux dernières opérations de programmation effectuées.

La MMU 4 traduit, de façon connue, une adresse virtuelle de 32 bits qui lui est fournie en entrée, en réalisant la traduction uniquement des bits de plus fort poids indiquant la page (ici les 20 premiers bits). Elle traduit ainsi le VPN en numéro de page physique ou PPN (en anglais "Physical Page Number"), à l'aide d'une table T prédéterminée, qui définit un espace d'adressage virtuel propre à chaque programme utilisateur à l'aide d'un ASID. La MMU 4 vérifie également que le programme utilisateur à l'origine de la traduction possède bien les droits correspondant à l'accès à la zone mémoire adressée par l'adresse virtuelle fournie en entrée.

La MMU 4 est reliée avec le registre tampon 7, avec le registre d'identifiant 6 et avec le multiplexeur 9, qui est relié en outre avec le registre d'ensemble 5 et le registre d'identifiant 6.

Un bus d'adresses virtuelles VA relie la CPU 2 à la MMU 4. Un bus de données DATA relie la CPU 2 au registre d'ensemble 5 et au multiplexeur/démultiplexeur 8, qui est relié en outre au registre tampon 7.

Trois fils f1, f2, f3 relient en outre la CPU 2 et le bloc de contrôle 10, et peuvent être mis respectivement à un niveau haut, ou à un niveau bas par la CPU 2.

Le dispositif de contrôle 10 est relié au registre d'ensemble 5, au registre d'identifiant 6, au registre tampon 7 et aux multiplexeurs 8 et 9. Il commande ces multiplexeurs et ces registres, en fonction de l'état des fils f1, f2, f3, pour constituer, à partir des éléments fournis en entrée aux multiplexeurs, des éléments de sortie, qui sont appliqués sur le bus d'adresses BA, pour le multiplexeur 9 et qui sont appliqués sur le bus de données BD, pour le multiplexeur/démultiplexeur 8, conformément au fonctionnement indiqué ci-après.

Un programme utilisateur P s'exécute sur la CPU 2 pour effectuer une opération de programmation du contrôleur de DMA 11 à l'aide d'une adresse virtuelle de source VA_SRC de 32 bits, d'une adresse virtuelle de destination VA_DEST de 32 bits et d'une taille i de zone mémoire à transférer.

Il comporte ainsi deux séquences successives Seq1 et Seq2 de trois instructions qui vont s'exécuter successivement.

Une séquence Seq1 ou Seq2 comporte chacune les instructions suivantes, avec des arguments respectifs :
- l'instruction "Translate" (instruction "T"), dont le format est "Translate (argVA ; argD)" où "argVA" est un argument d'adresse virtuelle et "argD" est un argument de données, permet notamment de traduire l'adresse virtuelle fournie en argument d'adresse, en adresse physique correspondante et de stocker cette adresse physique dans le registre tampon 7 ;
- instruction "StoreDMA" (instruction "S"), dont le format est "StoreDMA argVA " où "argVA" est un argument d'adresse virtuelle, permet notamment d'appliquer l'adresse physique stockée dans le registre tampon 7 sur le bus de données BD ; et
- instruction "LoadDMA" (instruction "L"), dont le format est "LoadDMA argVA", où "arg VA" est un argument d'adresse virtuelle, permet de fournir le statut de l'opération de programmation effectuée.

La première séquence Seq1 comporte :
"Translate (VA_SRC ; t)" (instruction "T1"), puis :
"StoreDMA VA_SRC" (instruction "S1"), et :
"LoadDMA VA_SRC" (instruction "L1").

La seconde séquence Seq2 comporte :
"Translate (VA_DEST ; t)" (instruction "T2"), puis :
"StoreDMA VA_DEST" (instruction "S2"), et enfin :
"LoadDMA VA_DEST" (instruction "L2").

La CPU 2 est adaptée pour, lors de l'exécution de l'instruction T1 par un programme utilisateur, placer l'argument d'adresse virtuelle fourni (ici VA_SRC) sur le bus VA, placer l'argument de données fourni (ici t) sur le bus de données de données DATA, et mettre au niveau haut le fil f1.

La MMU 4 traduit l'argument d'adresse virtuelle fourni VA_SRC en adresse physique PA_SRC conformément à ia table T, qui définit également l'ASID_{P} propre au programme utilisateur P. La MMU 4 fournit l'adresse physique PA_SRC au registre tampon 7 pour mémorisation. Elle fournit en outre l'ASID_{P} identifiant le programme utilisateur P dont provient l'instruction T1, au registre d'identifiant 6 pour mémorisation. Dans l'exemple décrit ici, les ASID sont codés sur 8 bits.

Puis un mot Mₜₐᵢₗₗₑ₁ comprenant des bits de poids forts égaux à la sous-adresse de base PA_DMA_BASE mémorisée dans le registre d'ensemble 5, suivis par des bits codant l'identifiant ASID_{P} fourni par la MMU 4 suite à la traduction de VA_SRC, est constitué et fourni en entrée du multiplexeur 9.

Le bloc de contrôle 10 est adapté pour, en réponse à la mise à l'état haut du fil f1, commander le multiplexeur/démultiplexeur 8 de façon à ce que la donnée t figurant sur le bus de données DATA soit appliquée sur le bus de données BD. Il est adapté en outre pour commander le multiplexeur 9 de façon à ce que le mot Mₜₐᵢₗₗₑ₁ soit appliqué sur le bus d'adresses BA.

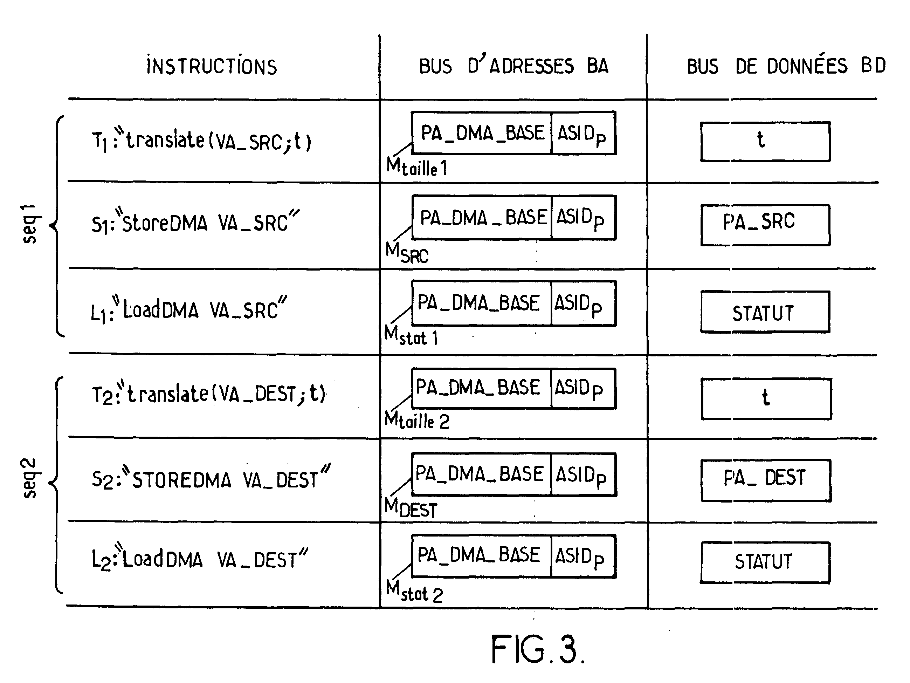

Les applications sur les bus BA et BD sont effectuées sous le contrôle du bloc de contrôle 10 à des moments respectifs liés par rapport à l'autre (par exemple quasi-simultanément, ou l'un un coup d'horloge avant l'autre, etc) et en fonction du protocole de gestion des bus retenu. Elles sont représentées sur la figure 3, qui est un tableau où chaque ligne correspond à une instruction de programmation de contrôleur de DMA exécutée sur la CPU 2 conformément au déroulement de la séquence Seq1, puis de la séquence Seq2 (colonne "instructions"), et aux éléments appliqués sur le bus d'adresses BA (colonne "bus d'adresses BA") et sur le bus de données BD (colonne "bus de données BD") suite à l'exécution par la CPU 2 de ladite instruction.

La machine d'états 17 du contrôleur de DMA 11 est initialement dans son état de départ d'une programmation de transfert DMA et pointe donc sur le registre de taille 13. Quand elle détecte la sous-adresse PA_DMA_BASE dans les bits de poids fort du mot Mₜₐᵢₗₗₑ₁ appliqué sur le bus d'adresse BA, elle extrait les huit bits suivant ladite sous-adresse, lesquels codent l'ASID_{P}, et les mémorise dans le registre d'atomicité 18. Puis elle sélectionne le registre de taille 13 et y effectue la mémorisation de la taille t qui est alors appliquée sur le bus de données BD. Elle renseigne ensuite le registre de statut 16 avec le code indiquant le succès ou l'échec de la mémorisation ainsi effectuée et déplace son pointeur de façon à pointer sur le registre de source 14 conformément au cycle C de la machine d'états 17.

Lors de l'exécution de l'instruction S1 "StoreDMA VA_SRC" par le programme utilisateur P, la CPU 2 place l'argument d'adresse virtuelle fourni (ici VA_SRC) sur le bus VA et met au niveau haut le fil f2.

La MMU 4 traduit l'argument d'adresse virtuelle fourni VA_SRC en adresse physique PA_SRC conformément à la table T, qui contient également l'ASID_{P} propre au programme utilisateur P. La MMU 4 fournit ainsi l'ASID_{P} qui identifie le programme utilisateur P dont provient l'instruction S1. Cet identifiant est ensuite comparé à l'identifiant mémorisé dans le registre d'identifiant 6, qui a été déterminé à partir de la première instruction T1 reçue par la CPU 2.

S'ils sont égaux, un mot M_{SRC} comprenant des bits de poids forts égaux à la sous-adresse PA_DMA_BASE mémorisée dans le registre d'ensemble 5, suivis par des bits codant l'identifiant ASID_{P} fourni par la MMU suite à la traduction de VA_SRC effectuée après réception de l'instruction S1, est constitué et fourni en entrée du multiplexeur 9.

Par ailleurs, s'ils sont égaux, on fournit au multiplexeur/démultiplexeur 8 le contenu du registre tampon 7 ayant en mémoire l'adresse physique de source PA_SRC mémorisée lors du traitement de l'instruction T1 par le bloc de traitement de l'instruction d'adresse 3.

Et le multiplexeur/démultiplexeur 8, respectivement le multiplexeur 9, est commandé par le bloc de contrôle 10 pour permettre l'application sur le bus de données BD, de l'adresse physique PA_SRC provenant du registre tampon 7, respectivement l'application du mot M_{SRC} sur le bus d'adresses BA, conformément à la ligne relative à l'instruction S1 de la figure 3.

La machine d'états 17 du contrôleur de DMA 11 pointe alors sur le registre de source 14. Quand elle détecte la sous-adresse PA_DMA_BASE dans les bits de poids fort du mot M_{SRC} appliqué sur le bus d'adresse BA, elle extrait les huit bits suivant la sous-adresse de base et correspondant à l'identifiant ASID_{P}, et les compare à l'identifiant mémorisé dans le registre d'atomicité 18.

S'ils sont différents, elle inscrit un code d'échec dans le registre de statut 16 relatif à l'opération en cours de mémorisation de l'adresse de source.

Si les identifiants sont égaux, elle sélectionne le registre de source 14 et y mémorise la donnée PA_SRC appliquée sur le bus de données BD. Puis elle renseigne le registre de statut 16 avec le code indiquant le succès ou l'échec de la mémorisation ainsi effectuée et incrémente ensuite son pointeur de façon à pointer sur le registre de statut 16 conformément au cycle C de la machine d'états 17 .

Lors de l'exécution de l'instruction suivante L1 ("LoadDMA VA_SRC") par le programme utilisateur P, la CPU 2 place l'argument d'adresse virtuelle fourni (ici VA_SRC) sur le bus VA et met au niveau haut le fil f3.

La MMU 4 traduit l'argument d'adresse virtuelle fourni VA_SRC en adresse physique PA_SRC conformément à la table T, et fournit l'ASID_{P} qui définit le programme utilisateur P dont provient l'instruction L1. Cet identifiant est comparé à l'identifiant mémorisé dans le registre d'identifiant 6, qui a été déterminé à partir de la première instruction T1 reçue par la CPU 2.

S'ils sont égaux, un mot Mₛₜₐₜ₁ est constitué et fourni en entrée du multiplexeur 9. Il comprend des bits de poids forts égaux à la sous-adresse PA_DMA_BASE mémorisée dans le registre d'ensemble 5, suivis par des bits codant l'identifiant ASID_{P} qui a été fourni par la MMU suite à la traduction de l'adresse VA_SRC effectuée en réponse à l'instruction L1.

Et le multiplexeur 9 est commandé par le bloc de contrôle 10 pour permettre l'application du mot Mₛₜₐₜ₁ sur le bus d'adresses BA, conformément à la ligne relative à l'instruction L1 de la figure 3.

De même, le démultiplexeur 8 est commandé par le bloc de contrôle pour permettre le passage du bus de données BD vers le bus de données DATA afin que la CPU 2 puisse lire le statut envoyé par le contrôleur de DMA.

La machine d'états 17 du contrôleur de DMA 11 pointe alors sur le registre de statut 16. Quand elle détecte la sous-adresse PA_DMA_BASE dans les bits de poids fort du mot Mₛₜₐₜ₁ appliqué sur le bus d'adresse BA, elle extrait les huit bits suivant la sous-adresse de base et correspondant à l'identifiant ASID_{P} et les compare à l'identifiant mémorisé dans le registre d'atomicité 18.

S'ils sont différents, elle inscrit un code d'échec dans le registre de statut 16 pour l'opération de fourniture de statut.

Puis, que les identifiants soient égaux ou non, elle sélectionne le registre de statut 16 et applique son contenu sur le bus de données BD. Elle déplace ensuite son pointeur de façon à pointer sur le registre de taille 13, conformément au cycle C de la machine d'états 17.

Le traitement de la première séquence Seq1 pour la programmation du contrôleur de DMA 11 est ainsi achevée. La seconde séquence Seq2 est ensuite exécutée.

Lors de l'exécution de l'instruction T2 ("Translate (VA_DEST ; t) ") par le programme utilisateur P, la CPU 2 place l'argument d'adresse virtuelle fourni (ici VA_DEST) sur le bus VA, place l'argument de données fourni (ici la taille t) sur le bus DATA et met au niveau haut le fil f1.

La MMU 4 traduit l'argument d'adresse virtuelle fourni VA_DEST en adresse physique PA_DEST conformément à la table T, qui définit également l'ASID_{P} propre au programme utilisateur P. La MMU 4 fournit l'adresse physique PA_DEST au registre tampon 7 pour mémorisation. Elle fournit en outre l'ASID_{P}, qui identifie le programme utilisateur P dont provient l'instruction T2, au registre d'identifiant 6 pour mémorisation.

Puis un mot Mₜₐᵢₗₗₑ₂ comprenant des bits de poids forts égaux à la sous-adresse PA_DMA_BASE mémorisée dans le registre d'ensemble 5, suivis par des bits codant l'identifiant ASID_{P} fourni par la MMU suite à la traduction de VA_DEST est constitué et fourni en entrée du multiplexeur 9.

En réponse à la mise à l'état haut du fil f1, le bloc de contrôle 10 est adapté pour commander le multiplexeur/démultiplexeur 8 de façon à ce que la donnée t figurant sur le bus de données DATA soit appliquée sur le bus de données BD et pour commander le multiplexeur 9 de façon à ce que le mot Mₜₐᵢₗₗₑ₂ soit appliqué sur le bus d'adresses BA, comme représenté sur la figure 3.

La machine d'états 17 du contrôleur de DMA 11 pointe alors sur le registre de taille 13, conformément au cycle C. Quand elle détecte la sous-adresse PA_DMA_BASE dans les bits de poids fort du mot Mₜₐᵢₗₗₑ₂ appliqué sur le bus d'adresse BA, elle extrait les huit bits suivant la sous-adresse de base et correspondant à l'identifiant ASID_{P} et les compare à l'identifiant mémorisé dans le registre d'atomicité 18.

S'ils sont différents, elle inscrit un code d'échec dans le registre de statut 16 pour l'opération de programmation de la taille du transfert.

S'ils sont égaux, elle sélectionne le registre de taille 13 et mémorise la taille t, qui figure sur le bus de données BD. Puis elle renseigne le registre de statut 16 avec le code indiquant le succès ou l'échec de la programmation ainsi effectuée.

La machine d'états 17 incrémente ensuite son pointeur de façon à pointer sur le registre de destination 15 conformément au cycle C.

Lors de l'exécution de l'instruction S2 ("StoreDMA VA_DEST") par le programme utilisateur P, la CPU 2 place l'argument d'adresse virtuelle fourni (ici VA_DEST) sur le bus VA et met au niveau haut le fil f2.

La MMU 4 traduit l'argument d'adresse virtuelle fourni VA_DEST en adresse physique PA_DEST conformément à la table T, qui définit également l'ASID_{P} propre au programme utilisateur P. La MMU 4 fournit l'ASID_{P} qui identifie le programme utilisateur P dont provient l'instruction S2. L' ASID_{P} est ensuite comparé à l'identifiant mémorisé dans le registre d'identifiant 6 qui a été déterminé à partir de l'instruction T2 reçue par la CPU 2.

S'ils sont égaux, un mot M_{DEST} comprenant des bits de poids forts égaux à la sous-adresse de base PA_DMA_BASE mémorisée dans le registre d'ensemble 5, suivis par des bits codant l'identifiant ASID_{P} fourni par la MMU suite à la traduction de VA_DEST en réponse à l'instruction S2, est constitué et fourni en entrée du multiplexeur 9.

Par ailleurs si les identifiants sont égaux, on fournit le contenu du registre tampon 7 ayant en mémoire l'adresse physique de source PA_DEST au multiplexeur/démultiplexeur 8.

Et comme dans la première séquence Seq1, le multiplexeur/démultiplexeur 8, respectivement le multiplexeur 9, est commandé par le bloc de contrôle 10 pour permettre l'application sur le bus de données BD de l'adresse physique PA_DEST provenant du registre tampon 7, respectivement l'application du mot M_{DEST} sur le bus d'adresses BA, conformément à la ligne relative à l'instruction S2 de la figure 3.

La machine d'états 17 du contrôleur de DMA 11 pointe alors sur le registre de destination 15. Quand elle détecte la sous-adresse PA_DMA_BASE dans les bits de poids fort du mot M_{DEST} appliqué sur le bus d'adresse BA, elle extrait les huit bits suivant la sous-adresse de base et correspondant à l'identifiant ASID_{P} et les compare à l'identifiant mémorisé dans le registre d'atomicité 18.

S'ils sont différents, elle inscrit un code d'échec dans le registre de statut 16 relatif à l'opération en cours de programmation de l'adresse de destination.

Si les identifiants sont égaux, elle sélectionne le registre de destination 15 et y mémorise la donnée VA_DEST alors appliquée sur le bus de données BD. Puis elle renseigne le registre de statut 16 avec le code indiquant le succès ou l'échec de la programmation d'adresse de destination effectuée et incrémente ensuite son pointeur de façon à pointer sur le registre de statut 16 conformément au cycle C de la machine d'états 17 .

Lors de l'exécution de l'instruction suivante L2 ("LoadDMA VA_DEST") par le programme utilisateur P, la CPU 2 place l'argument d'adresse virtuelle fourni (ici VA_DESt) sur le bus VA et met au niveau haut le fil f3.

La MMU 4 traduit l'adresse virtuelle fournie VA_DEST en adresse physique PA_DEST conformément à la table T, qui définit l'ASID_{P} propre au programme utilisateur P. La MMU 4 fournit l'ASID_{P} qui identifie le programme utilisateur P dont provient l'instruction L2, qui est ensuite comparé à l'identifiant mémorisé dans le registre d'identifiant 6 qui a été déterminé à partir de l'instruction T1 exécutée en premier par la CPU 2.

S'ils sont égaux, un mot Mₛₜₐₜ₂ comprenant des bits de poids forts égaux à la sous-adresse de base PA_DMA_BASE mémorisée dans le registre d'ensemble 5, suivis par des bits codant l'identifiant ASID_{P} fourni par la MMU suite à la traduction de VA_DEST en réponse à l'instruction L2, est constitué et fourni en entrée du multiplexeur 9.

Puis le mot Mₛₜₐₜ₂ est appliqué sur le bus d'adresses BA, comme indiqué à la ligne relative à l'instruction L2 de la figure 3.

De même, le démultiplexeur 8 est commandé par le bloc de contrôle pour permettre ie passage du bus de données BD vers le bus de données DATA afin que la CPU 2 puisse lire le statut envoyé par le contrôleur de DMA.

La machine d'états 17 du contrôleur de DMA 11 pointe alors sur le registre de statut 16. Quand elle détecte la sous-adresse PA_DMA_BASE dans les bits de poids fort du mot Mₛₜₐₜ₂ appliqué sur le bus d'adresse BA, elle extrait les huit bits suivant la sous-adresse de base et correspondant à l'identifiant ASID_{P} et les compare à l'identifiant mémorisé dans le registre d'atomicité 18.

S'ils sont différents, elle inscrit un code d'échec dans le registre de statut 16 relatif à l'opération de fourniture du statut.

Puis, que les identifiants soient égaux ou non, elle sélectionne le registre de statut 16 et applique son contenu sur le bus de données BD et incrémente ensuite son pointeur de façon à pointer sur le registre de taille 13 conformément au cycle C de la machine d'états 17. Elle retourne alors à l'état de départ du cycle C.

Le traitement de la séquence Seq2 pour la programmation du contrôleur de DMA 11 est ainsi achevé.

Le contrôleur de DMA est à présent programmé avec les données de source, de taille et de destination dont il a besoin pour réaliser le transfert DMA.

L'invention, en introduisant deux nouvelles instructions (T et S) et en modifiant une MMU standard en y ajoutant les modules supplémentaires décrits dans le bloc de traitement, permet de réaliser la programmation du contrôleur de DMA sans présenter l'inconvénient de perdre un espace mémoire adressable important, comme dans les solutions de l'art antérieur. La troisième instruction (L) permet de contrôler la bonne réalisation des opérations de programmation.

L'invention permet en outre le traitement des adresses virtuelles fournies à la MMU pour traduction, qui ne concerne pas une programmation du contrôleur DMA (les fils f1, f2 et f3 sont tous au niveau bas).

Dans le mode de réalisation décrit ci-dessus, la taille peut en fait n'être fournie par la programme utilisateur que dans l'instruction T2 de la deuxième séquence Seq2.

Les mots Mₜₐᵢₗₗₑ₁, M_{SRC}, Mₛₜₐₜ₁, Mₜₐᵢₗₗₑ₂, M_{DEST} et Mstat2 comportent dans le cas décrit 28 bits (20 bits pour le codage de la sous-adresse de base, et 8 bits pour le codage de l'ASID). L'architecture étant à 32 bits, les bits restants peuvent être utilisés dans d'autres modes de réalisation de l'invention pour transmettre des informations supplémentaires.

Par exemple, dans un mode de réalisation différent de celui décrit ci-dessus, le bloc de traitement d'adresses est adapté pour, lorsque l'instruction de programmation reçue est l'instruction "translate" (fil f1 au niveau haut), insérer à la suite de l'identifiant, dans le mot à appliquer alors sur le bus d'adresses BA (Mₜₐᵢₗₗₑ₁ ou Mₜₐᵢₗₗₑ₂) un code X_{T} indiquant le registre de taille. Si comme dans l'exemple décrit ci-dessus, l'architecture est à 32 bits, l'ASID codé sur 8 bits et la VPN sur 20 bits, le code X_{T} est codé sur au plus 4 bits. Dans un mode de réalisation, un code X_{ST} est en outre inséré par le bloc de traitement d'adresses lors de la réception d'une instruction "LoadDMA" (fil f3 au niveau haut) dans le mot à appliquer alors sur le bus d'adresses BA (Mₛₜₐₜ₁ ou Mₛₜₐₜ₂).

Le contrôleur de DMA est alors adapté pour extraire, dans un mot appliqué sur le bus d'adresses BA et comportant la sous-adresse PA_DMA_BASE, l'ASID et un code, le code et pour en déduire le registre à sélectionner parmi les registres de taille et de statut. Les registres de taille et de statut pouvant être ainsi désignés explicitement dans un mot placé sur le bus d'adresses, le cycle de la machine d'états n'est alors sollicité que dans les cas où le mot appliqué sur le bus BA et comportant la sous-adresse de base dans les bits de poids fort ne présente pas de code. Le cycle, dans le cas où un code a été défini pour le registre de taille et pour le registre de statut, n'a alors que 2 états : un état "source" de départ, et un état "destination". Le cycle a 3 états si un seul code (par exemple pour le registre de taille) a été défini.

Dans un autre mode de réalisation, la machine d'états, par exemple celle citée ci-dessus comportant un cycle à 2 états (un état de départ qui est un état de source et un état de destination), est intégrée au bloc de traitement d'adresses (elle ne figure plus alors dans le contrôleur de DMA). L'état est modifié selon le cycle au fur et à mesure de la réception d'une instruction "StoreDMA" (fil f2 au niveau haut). Dans ce cas, le code X_{T}, respectivement X_{ST}, est d'une part inséré aux mots (M_{taille 1}, M_{taille 2}, respectivement Mₛₜₐₜ₁, Mstat2) appliqués sur le bus d'adresses lorsque que le fil f1, respectivement f3, est au niveau haut. Et lorsque le fil f2 est au niveau haut, si l'état courant du cycle est l'état "destination", le bloc de traitement d'adresses sélectionne un code X_{D} et si l'état courant du cycle est l'état "source", il sélectionne un code Xₛ. Puis le code sélectionné est inséré à la suite de la sous-adresse de base et de l'ASID dans le mot à appliquer sur le bus d'adresses BA (M_{SRC} si l'état est un état de source et M_{DEST} si c'est un état de destination). Dans ce mode de réalisation, le contrôleur de DMA est adapté pour déterminer le registre à sélectionner parmi les registres de l'ensemble, en fonction du code X_{S}, X_{D}, X_{T} ou X_{ST} dans le mot appliqué sur le bus d'adresses BA.

L'utilisation des identifiants, ici l'ASID relatif au programme utilisateur P qui a généré l'instruction, permet de vérifier l'atomicité des instructions qui se succèdent, aussi bien au niveau du bloc de traitement d'adresses que du contrôleur de DMA 11. Cette disposition permet de repérer l'insertion d'une instruction provenant d'un programme utilisateur P' différent du programme utilisateur P et de ne pas mélanger les informations nécessaires au transfert DMA. Cela permet de renforcer la sécurité du système contre les tentatives d'accès frauduleux à la mémoire externe via des accès DMA. Lorsque le contrôleur de DMA est un contrôleur de DMA multi-canaux, c'est-à-dire qu'il est apte à renseigner en parallèle plusieurs ensembles de registres du type de l'ensemble 12, l'identifiant permet en outre de sélectionner le registre de taille, le registre source, le registre destination ou le registre statut, dans l'ensemble qui concerne le programme P. Si l'ASID envoyé ne correspond pas à l'ASID mémorisé dans le registre d'atomicité de l'un des ensembles, il y a édition d'un status d'erreur.

Dans un autre mode de réalisation, les identifiants (les ASID dans le cas décrit en référence aux figures) des programmes utilisateurs effectuant une programmation de contrôleur de DMA peuvent ne pas être pris en compte dans la machine d'états. Dans un mode de réalisation, ils peuvent également ne pas être pris en compte également dans le bloc de traitement d'adresses. Dans ce cas, il n'y a pas besoin des registres d'identifiant 6 et 18, ni de transmettre l'identifiant dans le mot appliqué sur ie bus d'adresses BA. D'autres dispositions sont alors prises pour s'affranchir de problèmes de non-atomicité des instructions de programmation de contrôleur de DMA. Dans un mode de réalisation, le bloc de traitement d'adresses constitue alors des mots à appliquer sur le bus d'adresses BA avec les adresses physiques complètes des registres (et non plus seulement alors la sous-adresse de base). Là encore, une machine d'états à 2 états est utilisée dans le bloc de traitement d'adresses pour savoir si l'adresse à placer sur le bus d'adresses BA en réception d'une instruction S, est l'adresse de registre de source ou l'adresse de registre de destination. Dans un mode de réalisation sans prise en compte d'identifiant, seule la première instruction T de chaque séquence a besoin d'avoir un argument d'adresse virtuelle.

Dans un autre mode de réalisation, l'instruction pour connaître le statut de la programmation peut n'être utilisée qu'une fois après l'application de deux séquences d'Instructions "Translate" et "StoreDMA", relative d'une part à l'adresse de source et à la taille, d'autre part à l'adresse de destination.

Dans un autre mode de réalisation, l'argument de taille peut n'être fourni que dans la deuxième séquence Seq2 et pas dans la séquence Seq1.L'ensemble des modes de réalisation décrits ci-dessus permet que le programme utilisateur P programmant le contrôleur de DMA n'ait pas accès aux adresses des registres du contrôleur de DMA, ce qui assure un niveau de protection contre les violations d'accès à la mémoire.

Toutefois, dans d'autres mode de réalisation, l'adresse virtuelle du registre de source, respectivement de destination, est fournie en argument d'adresse de l'instruction « StoreDMA » (à la place de l'adresse virtuelle de source et de destination du transfert DMA. Elle est traduite par la MMU en adresse physique. Le mot appliqué sur le bus d'adresses (M_{SRC}, M_{DEST}) comprend alors l'adresse physique du registre de source, respectivement de destination.

De même, dans ce mode de réalisation, l'instruction « LoadDMA » comprend comme argument d'adresse, l'adresse virtuelle du registre de statut, qui est traduite en adresse physique par la MMU. Et le mot (Mₛₜₐₜ₁, Mₛₜₐₜ₂) appliqué sur le bus d'adresses correspond l'adresse physique du registre de statut. Dans ce mode de réalisation, le bloc de traitement d'adresses est adapté pour, en réception de l'instruction « Translate » (fil f1 au niveau haut), constituer le mot à appliquer sur le bus d'adresses avec l'adresse physique du registre de taille.

Dans ce cas, on ne vérifie pas l'atomicité à l'aide d'identifiants déterminés sur la base des arguments d'adresses des instructions. Et chaque registre du contrôleur de DMA est adressé explicitement par les mots placés sur le bus d'adresses BA. Il n'y a alors pas besoin de machine d'états.

## Revendications

1. Procédé de programmation d'un contrôleur de DMA dans un système sur puce (1) comprenant une unité centrale de traitement (2), une unité (4) de gestion de mémoire adaptée pour traduire un mot d'adresse virtuelle conformément à une table de traduction (T) déterminée, un contrôleur de DMA (11) relié à un bus d'adresses (BA) et à un bus de données (BD) et comprenant au moins un ensemble (12) de registres associé à une sous-adresse de base (PA_DMA_BASE), chaque ensemble comportant au moins un registre de source (14), un registre de destination (15) et un registre de taille (13), ledit procédé comprenant les étapes suivantes mises en oeuvre sous la commande de l'unité centrale de traitement :
- en réponse à une première instruction dédiée déterminée (T1, T2) d'un programme utilisateur (P) et comprenant un argument d'adresses indiquant une adresse virtuelle (VA_SRC ; VA_DEST), l'unité de gestion de mémoire traduit ladite adresse virtuelle en adresse physique correspondante (PA_SRC ; PA_DEST), ladite adresse physique correspondante étant mémorisée dans un registre tampon (7) inaccessible par le programme utilisateur ;
- en réponse à une deuxième instruction dédiée déterminée (S1, S2) du programme utilisateur, ladite adresse physique stockée dans le registre tampon est appliquée sur le bus de données et un premier mot (M_{SRC},M_{DEST}) comprenant au moins des bits de poids fort indiquant la sous-adresse de base est appliqué sur le bus d'adresses ;
- le contrôleur de DMA sélectionne un registre parmi le registre de source et le registre de destination en fonction du premier mot appliqué sur le bus d'adresses en réponse à la deuxième instruction et mémorise, dans ledit registre sélectionné, l'adresse physique appliquée sur le bus de données.

2. Procédé de programmation d'un contrôleur de DMA selon la revendication 1, selon lequel chacun desdits registres (13,14,15,16) de l'ensemble (5) de registres a une adresse physique respective codée sur un nombre déterminé N de bits comprenant des bits de poids forts indiquant la sous-adresse de base de l'ensemble de registres suivis de bits déterminant un décalage respectif dans l'ensemble.

3. Procédé de programmation d'un contrôleur de DMA selon la revendication 1 ou ia revendication 2, selon lequel la première instruction (T1, T2) comprend en outre un argument de données (t) indiquant une taille, et selon lequel :
- en réponse à la première instruction reçue, on applique d'une part, ledit argument de données sur le bus de données (BD) et d'autre part, un second mot (Mₜₐᵢₗₗₑ₁, Mₜₐᵢₗₗₑ₂) comprenant des bits de poids fort indiquant la sous-adresse de base (PA_DMA_BASE) sur le bus d'adresses (BA) ;
- et le contrôleur de DMA (11) sélectionne le registre de taille (13) en fonction dudit second mot appliqué sur le bus d'adresses et mémorise l'argument de données dans ledit registre de taille.

4. Procédé de programmation d'un contrôleur de DMA selon l'une quelconque des revendications précédentes, selon lequel l'ensemble (5) de registres du contrôleur de DMA (11) comporte en outre au moins un registre de statut (16) relié au bus de données (BD), et selon lequel, en réponse à une troisième instruction dédiée déterminée (L1, L2) du programme utilisateur (P),
- on applique sur le bus d'adresses (BA) au moins un troisième mot (Mₛₜₐₜ₁, Mₛₜₐₜ₂) comprenant des bits de poids fort indiquant la sous-adresse de base (PA_DMA_BASE),
- en réponse à cette application, le contrôleur de DMA (11) sélectionne le registre de statut et applique le contenu dudit registre de statut sur le bus de données (BD).

5. Procédé de programmation d'un contrôleur de DMA selon la revendication 4, selon lequel en outre :
- en réponse à la première instruction déterminée (T1, T2), on détermine et on mémorise dans un registre d'identifiant (6), un identifiant (ASID_{P}) du programme utilisateur (P) ;
- en réponse à au moins une instruction déterminé parmi la deuxième et la troisième instructions (S1, S2, L1, L2), on détermine un identifiant (ASID_{P}) du programme utilisateur et on le compare à l'identifiant du programme utilisateur mémorisé dans ledit registre d'identifiant ; et
- si ladite instruction déterminée est la deuxième instruction (S1, S2), on n'applique, sur le bus de données (BD), l'adresse physique stockée dans le registre tampon et on n'applique le premier mot (M_{SRC}, M_{DEST}) sur le bus d'adresses (BA), que si les deux identifiants sont égaux, alors que
- si ladite instruction est la troisième instruction (L1, L2), on n'applique le troisième mot (Mₛₜₐₜ₁, Mₛₜₐₜ₂) sur le bus d'adresses, que si les deux identifiants sont égaux.

6. Procédé de programmation d'un contrôleur de DMA selon la revendication 5, selon lequel l'identifiant déterminé relativement à au moins une instruction est un identificateur d'espace d'adressage (ASID_{P}) qui est stocké dans la table (T) de l'unité de gestion de mémoire (4) pour chaque programme utilisateur du système sur puce et qui est délivré par l'unité de gestion de mémoire, lorsqu'elle réalise une opération de traduction d'une adresse virtuelle fournie en argument d'adresse de ladite instruction.

7. Procédé de programmation d'un contrôleur de DMA selon l'une quelconque des revendications précédentes, selon lequel, le contrôleur de DMA (11) comportant une machine d'états (17), la sélection d'un registre parmi les registres (13, 14, 15, 16) de l'ensemble (5) est effectuée par ladite machine d'état en fonction en outre de l'état d'avancement de ladite machine d'états dans un cycle ordonné (C) comportant la source et la destination.

8. Procédé de programmation d'un contrôleur de DMA selon l'une quelconque des revendications 5 à 7, selon lequel au moins un mot déterminé parmi le premier mot (M_{SRC}, M_{DEST}), le second mot (Mₜₐᵢₗₗₑ₁, Mₜₐᵢₗₗₑ₂) et le troisième mot (Mₛₜₐₜ₁, Mₛₜₐₜ₂) appliqués sur le bus d'adresses (BA) comprend en outre l'identifiant (ASID_{P}) du programme utilisateur, et selon lequel la sélection du registre (13, 14, 15, 16) est effectuée par le contrôleur de DMA (11) en fonction en outre dudit identifiant.

9. Système sur puce (11) comprenant :
- un contrôleur de DMA (11) relié à un bus d'adresses et à un bus de données (BD) et comprenant au moins un ensemble (12) de registres associé à une sous-adresse de base (PA_DMA_BASE), chaque ensemble comportant au moins un registre de source (14), un registre de destination (15) et un registre de taille (13) ;
- un bloc (3) de traitement d'adresses comprenant :
- une unité (4) de gestion de mémoire adaptée pour traduire un mot d'adresse virtuelle fourni en entrée en un mot d'adresse physique conformément à une table de traduction (T) déterminée,
- un registre d'ensemble (5) comportant au moins la sous-adresse de base ;
- une unité centrale de traitement (2) adaptée pour, en réponse à au moins une première instruction (T1, T2) déterminée dédiée à la programmation de contrôleur de DMA, puis en réponse à au moins une seconde instruction (S1, S2) déterminée dédiée à la programmation de contrôleur DMA, lesdites instructions étant comprises dans un programme utilisateur (P) s'exécutant sur ladite unité centrale de traitement et comportant un argument d'adresses (argVA) indiquant une adresse virtuelle (VA_SRC, VA_DEST), fournir ladite adresse virtuelle à l'unité de gestion de mémoire ;
- un registre tampon (7) inaccessible par ledit programme utilisateur ;
dans lequel le bloc de traitement d'adresses comprend en outre des moyens pour mémoriser dans ledit registre tampon l'adresse physique (PA_SRC, PA_DEST) résultant de la traduction par l'unité de gestion de mémoire de ladite adresse virtuelle conformément à la table de traduction ;
dans lequel ledit bloc de traitement d'adresses est adapté pour, en réponse à la réception d'instructions déterminées comportant au moins la deuxième instruction, constituer des mots (Mₜₐᵢₗₗₑ₁, Mₜₐᵢₗₗₑ₂, M_{SRC}, M_{DEST}, Mₛₜₐₜ₁, Mₛₜₐₜ₂) comprenant au moins des bits de poids fort indiquant la sous-adresse d'ensemble mémorisée dans le registre d'ensemble et pour appliquer lesdits mots sur le bus d'adresses (BA), et pour, lorsque ladite instruction est la deuxième instruction (S1, S2), en plus de l'application sur le bus d'adresses d'un premier mot (M_{SRC}, M_{DEST}) constitué suite à la réception de ladite deuxième instruction, appliquer sur le bus de données ladite adresse physique mémorisée dans le registre tampon ;
et dans lequel le contrôleur de DMA est adapté pour sélectionner un registre parmi le registre de source et le registre de destination en fonction du premier mot (M_{SRC}, M_{DEST}) appliqué sur le bus d'adresses en réponse à la deuxième instruction et pour mémoriser, dans ledit registre sélectionné, l'adresse physique appliquée sur le bus de données.

10. Système sur puce (1) selon la revendication 9, dans lequel chacun desdits registres (13, 14, 15, 16) de l'ensemble (12) de registres a une adresse physique respective codée sur un nombre déterminé N de bits comprenant des bits de poids forts indiquant la sous-adresse de base de registres (PA_DMA_BASE) suivis de bits déterminant un décalage respectif dans l'ensemble.

11. Système sur puce (1) selon la revendication 9 ou la revendication 10, dans lequel la première instruction (T1, T2) comprend en outre un argument de données (argD) indiquant une taille (t), et :
- le bloc de traitement d'adresses (3) est adapté pour, en réponse à la première instruction reçue, appliquer sur le bus de données (BD), ledit argument de données et sur le bus d'adresses (BA) un deuxième mot (Mₜₐᵢₗₗₑ₁, Mₜₐᵢₗₗₑ₂) comportant des bits de poids fort indiquant la sous-adresse de base (PA_DMA_BASE) mémorisée dans le registre d'ensemble (5) ;
- et le contrôleur de DMA (11) est adapté pour sélectionner le registre de taille (13) à partir du deuxième mot appliqué sur le bus d'adresses et mémoriser dans ledit registre de taille l'argument de données appliqué sur le bus de données.

12. Système sur puce (1) selon l'une quelconque des revendications 9 à 11, dans lequel :
- le bloc de traitement d'adresses (3) est adapté pour, en réponse à une troisième instruction (L1, L2) déterminée dédiée reçue par l'unité centrale de traitement, appliquer sur le bus d'adresses (BA) un troisième mot (Mₜₐᵢₗₗₑ₁, Mₜₐᵢₗₗₑ₂) comportant des bits de poids fort indiquant la sous-adresse de base (PA_DMA_BASE) ; et
- l'ensemble (5) de registres du contrôleur de DMA comporte en outre un registre de statut (16), et le contrôleur de DMA est adapté pour, en réponse à l'application dudit troisième mot sur le bus d'adresses, sélectionner ledit registre de statut et appliquer le contenu dudit registre de statut sur le bus de données.

13. Système sur puce (1) selon la revendication 12, dans lequel le bloc de traitement d'adresses (3) comprend :
- des moyens (T) pour déterminer à partir de la première instruction (T1, T2) déterminée reçue par l'unité centrale de traitement (2), un premier identifiant (ASID_{P}) du programme utilisateur (P) duquel la première instruction provient et pour déterminer à partir d'au moins une instruction reçue parmi la deuxième et la troisième instructions (S1, S2, L1, L2), un second identifiant du programme utilisateur duquel ladite instruction provient ;
- un registre d'identifiant (6) pour mémoriser ledit premier identifiant ;
- et des moyens de comparaison pour comparer lesdits premier et second identifiants ;
et le bloc de traitement d'adresses (3) est adapté pour, si ladite instruction est la deuxième instruction (S1, S2) n'appliquer sur le bus de données (BD), l'adresse physique (PA_SRC, PA_DEST) stockée dans le registre tampon (7) et sur le bus d'adresses (BA) le premier mot (M_{SRC}, M_{DEST}), que si lesdits premier et second identifiants sont égaux, et si ladite instruction est la troisième instruction (L1, L2), n'appliquer sur le bus d'adresses le troisième mot (Mₛₜₐₜ₁, Mₛₜₐₜ₂) que si lesdits premier et second identifiants sont égaux.

14. Système sur puce (1) selon la revendication 13, dans lequel l'identifiant est un identificateur d'espace d'adressage (ASID) stocké dans la table (T) de l'unité de gestion de mémoire (4) pour chaque programme (P) utilisateur du système sur puce (1) et délivré lors d'une opération de traduction par l'unité de gestion de mémoire.

15. Système sur puce (1) selon l'une quelconque des revendications 9 à 14, dans lequel le contrôleur de DMA (11) comporte une machine d'états (17) adaptée pour sélectionner un registre parmi les registres (13, 14, 15, 16) de l'ensemble de registres en fonction d'au moins un état d'avancement de ladite machine d'états dans un cycle (C) ordonné comportant au moins la source et la destination.

16. Système sur puce (1) selon l'une quelconque des revendications 13 à 15, dans lequel le bloc de traitement d'adresses (3) est adapté pour inclure en outre dans le mot constitué suite à la réception d'au moins une instruction déterminée, l'identifiant (ASID_{P}) déterminé à partir de ladite instruction ; et
dans lequel le contrôleur de DMA (11) effectue la sélection d'un registre (13, 14, 15, 16) en fonction dudit identifiant figurant dans ledit mot appliqué sur le bus d'adresses (BA).
